# EUROPÄISCHE PATENTSCHRIFT

(11) **EP 1 921 351 B1**
(45) Veröffentlichungstag und Bekanntmachung des Hinweises auf die Patenterteilung: **14.10.2009**
(21) Anmeldenummer: 06123651.9
(22) Anmeldetag: 08.11.2006
(51) Int. Cl.: F16H 61/688, F16H 61/28

(54) **Hydraulische Steuerungsvorrichtung für ein automatisiertes Doppelkupplungsgetriebe**
Hydraulic control for a dual clutch automated transmission
Commande hydraulique pour une transmission automatisée à double embrayage

(43) Veröffentlichungstag der Anmeldung: 14.05.2008
(73) Patentinhaber: Getrag Ford Transmissions GmbH, 50735 Köln (DE)
(72) Erfinder: Eggert, Ulrich, 41751, Viersen (DE); Siebigteroth, Marco, 53773, Hennef (DE); Möhlmann, Reinhard, 50735, Köln (DE); Leibbrandt, Martin, Dr., 50181, Bedburg (DE)

(56) Entgegenhaltungen:
- EP-A- 1 635 091
- EP-A- 1 637 756
- DE-A1- 10 134 115

## Beschreibung

Die Erfindung betrifft eine hydraulische Steuerungsvorrichtung für ein automatisiertes Doppelkupplungsgetriebe, das ein erstes Teilgetriebe mit einer ersten Kupplung, ein zweites Teilgetriebe mit einer zweiten Kupplung sowie mehrere Aktuatoren zum Ein-/Auslegen von Gängen der zwei Teilgetriebe aufweist.

Aus der EP 1 635 091 A1 ist eine hydraulische Steuerungsvorrichtung für ein automatisiertes Doppelkupplungsgetriebe bekannt, das eine Regelungseinheit und eine Umschaltvorrichtung aufweist. Die Regelungseinheit gibt einen regelbaren Druck und/oder einen regelbaren Volumenstrom für die Betätigung der ersten und zweiten Kupplung und für die Betätigung der Aktuatoren vor. Durch die Umschaltvorrichtung lässt sich der regelbare Druck bzw. der regelbare Volumenstrom auf die Kupplungen und/oder die Aktuatoren schalten.

Die Steuerungsvorrichtung der EP 1 635 091 A1 umfasst einen Gruppenselektor, durch den die Regelungseinheit mit einer ersten dem ersten Teilgetriebe zugeordneten Gruppe von Aktuatoren oder mit einer zweiten dem zweiten Teilgetriebe zugeordneten Gruppe von Aktuatoren verbunden werden kann. Der Gruppenselektor ist dabei so ausgebildet, dass entweder die erste Gruppe von Aktuatoren oder die zweite Gruppe von Aktuatoren mit der Regelungseinheit verbunden ist.

Die Umschaltvorrichtung weist ein erstes Umschaltventil auf, wobei dieses erste Umschaltventil und der Gruppenselektor durch ein gemeinsames Steuersignal angesteuert werden. Liegt dieses gemeinsame Steuersignal an dem ersten Umschaltventil und dem Gruppenselektor an, so wird die erste Kupplung drucklos gestellt und die erste Gruppe von Aktuatoren mit der Regeleinheit verbunden. Liegt hingegen das gemeinsame Steuersignal nicht an, so wird die erste Kupplung mit der Regelungseinheit verbunden und die erste Gruppe von Aktuatoren drucklos gestellt. Dadurch kann zuverlässig verhindert werden, dass in einem unter Last stehenden Teilgetriebe bei geschlossener Kupplung Schaltvorgänge stattfinden, was zu einer Beschädigung des Doppelkupplungsgetriebes führen könnte.

Bei schnellen Gangwechseln zwischen zwei Gängen eines Teilgetriebes kann es sinnvoll sein, die dem Teilgetriebe zugehörige Kupplung nicht vollständig zu belüften, sondern zumindest teilweise geschlossen zu halten. Dies ist mit der Steuerungsvorrichtung der EP 1 635 091 A1 nicht möglich.

Der Erfindung liegt daher die Aufgabe zugrunde, eine hydraulische Steuerungsvorrichtung für ein Doppelkupplungsgetriebe bereitzustellen, die sicher und komfortabel ist und schnelle Gangwechsel von Gängen eines Teilgetriebes im Doppelkupplungsgetriebe ermöglicht.

Die der Erfindung zugrunde liegende Aufgabe wird durch die Merkmalskombination gemäß Anspruch 1 gelöst. Bevorzugte Ausführungsbeispiele können den Unteransprüchen entnommen werden.

Gemäß Anspruch 1 zeichnet sich die hydraulische Steuerungsvorrichtung dadurch aus, dass der Gruppenselektor durch ein weiteres Steuersignal ansteuerbar ist, wodurch der wenigstens eine regelbare Druck und/oder regelbare Volumenstrom gleichzeitig auf die erste Kupplung und die erste, dem ersten Teilgetriebe zugeordnete Gruppe von Aktuatoren schaltbar ist. Dadurch ist es möglich, bei einem Schaltvorgang im ersten Teilgetriebe die erste Kupplung weiterhin mit einem regelbaren Druck zu beaufschlagen, um diese beispielsweise in ihrem Greifpunkt zu halten, in dem sie gerade kein Drehmoment mehr überträgt. Ist der Schaltvorgang abgeschlossen bzw. nahezu abgeschlossen, kann die erste Kupplung ohne jeglichen Zeitverzug geschlossen werden, um dann Drehmoment zu übertragen. Dadurch lassen sich schnellere Gangwechsel zwischen zwei Gängen eines Teilgetriebes realisieren.

In einem bevorzugten Ausführungsbeispiel sind durch die erste Gruppe von Aktuatoren ein Rückwärtsgang und ein erster Vorwärtsgang des Doppelkupplungsgetriebes ein-/auslegbar. Somit kann durch die erfindungsgemäße Steuerungsvorrichtung ein schneller Gangwechsel vom Rückwärtsgang in den ersten Gang realisiert werden.

Vorzugsweise umfassen die Umschaltvorrichtung ein zweites Umschaltventil und die Regelungseinheit ein erstes Regelventil und ein zweites Regelventil, wobei das erste Umschaltventil in einer Stellung B₁ das erste Regelventil mit der ersten Kupplung verbindet und von den Aktuatoren trennt und in einer Stellung C₁ das erste Regelventil mit den Aktuatoren verbindet und von der ersten Kupplung trennt, und wobei das zweite Umschaltventil in einer Stellung B₂ das zweite Regelventil mit der zweiten Kupplung verbindet und von den Aktuatoren trennt und in einer Stellung C₂ das zweite Regelventil mit dem Schaltsystem verbindet und von der zweiten Kupplung trennt. Die Stellung B₁ des ersten Umschaltventils kann dabei eine federbelastete Ruhestellung sein, wobei sich die zweite Stellung C₂ des ersten Umschaltventils durch Anliegen des gemeinsamen Steuersignals ergibt.

In einem bevorzugten Ausführungsbeispiel umfasst der Gruppenselektor ein Schaltventil, das in einer ersten Stellung die erste Gruppe von Aktuatoren von der Regelungseinheit trennt und in einer zweiten Stellung eine Verbindung zwischen der ersten Gruppe von Aktuatoren und der Regelungseinheit ermöglicht, wobei das Schaltventil sich in der zweiten Stellung befindet oder in die zweite Stellung schaltet, wenn das gemeinsame Steuersignal und/oder das weitere Steuersignal an dem Schaltventil anliegen. Ist beispielsweise das gemeinsame Steuersignal auf Null gesetzt bzw. liegt dieses nicht an, so verbindet das erste Umschaltventil das erste Regelventil mit der ersten Kupplung. Dadurch lässt sich die Kupplung nach Bedarf regeln, beispielsweise kann sie im oder in der Nähe des Greifpunktes gehalten werden. Um nun Gänge des ersten Teilgetriebes zu schalten, wird das weitere Steuersignal an das Schaltventil des Gruppenselektors angelegt, so dass eine Verbindung zwischen der ersten Gruppe von Aktuatoren und dem zweiten Regelventil möglich ist. Dafür muss das zweite Umschaltventil sich in seiner zweiten Stellung C₂ befinden, damit der regelbare Druck auf die Aktuatoren der ersten Gruppe wirken kann.

Die erste Stellung des Schaltventils des Gruppenselektors kann eine federbelastete Ruhestellung sein. Nur wenn wenigstens eines der beiden Steuersignale (gemeinsames Steuersignal, weiteres Steuersignal) anliegt, kann die erste Gruppe von Aktuatoren betätigt werden.

In einem bevorzugten Ausführungsbeispiel wird das Schaltventil des Gruppenselektors durch ein Steuersignal einer Ansteuerung betätigt, durch die eine weitere Ventileinheit der hydraulischen Steuerungsvorrichtung angesteuert wird. Dadurch lässt sich ein das Steuersignal erzeugendes Signalelement einsparen, das in der Regel elektrisch betätigt wird und mit vergleichsweise hohen Kosten verbunden ist. Somit kann ein ohnehin schon in der hydraulischen Steuerungsvorrichtung vorhandenes Steuersignal zur Aktivierung/Betätigung des Schaltventils des Gruppenselektors verwendet werden. Dabei sollte es sich um ein Steuersignal handeln, welches bei Aktivierung des Gruppenselektors keine unerwünschten Nebenwirkungen auslöst.

Vorzugsweise ist die Ansteuerung als Zweibereichsregler ausgelegt, wobei in einem ersten Bereich die weitere Ventileinheit angesteuert wird und in entsprechenden Grenzen regelbar ist. In einem zweiten Bereich kann das Schaltventil des Gruppenselektors betätigt werden. Solange sich der Zweibereichsregler im ersten Bereich befindet, findet kein Schaltvorgang des Schaltventils des Gruppenselektors durch die Ansteuerung statt. Erst wenn der zweite Bereich erreicht wird, kann über die Ansteuerung der Gruppenselektor aktiviert werden.

Vorzugsweise nimmt im zweiten Bereich die weitere Ventileinheit eine Notstellung ein. Diese Notstellung ist so auszulegen, dass die Ventileinheit ihre zugedachte Aufgabe zumindest in einem ausreichenden Maße noch erfüllen kann. Die weitere Ventileinheit kann als Kühlölregulator ausgebildet sein. Dieser Kühlölregulator kann ein Proportionalregler sein, der im ersten Bereich des Zweibereichsreglers die Kühlölmenge reguliert und im zweiten Bereich die zu kühlenden Kupplungen mit einer minimal notwendigen Menge an Kühlöl versorgt.

Am Beispiel eines Gangwechsels von dem Rückwärtsgang in den ersten Vorwärtsgang soll ein bevorzugtes Steuerungsverfahren für ein Doppelkupplungsgetriebe in einem Kraftfahrzeug beschrieben werden, das sich mit der erfindungsgemäßen Steuerungsvorrichtung umsetzen lässt. Der Rückwärtsgang und der erste Vorwärtsgang sind dabei der ersten Gruppe von Aktuatoren zugeordnet, d. h. beide Gänge sind dem ersten Teilgetriebe zugeordnet.

Nach erfolgter Rückwärtsfahrt des Kraftfahrzeugs wird die bei der Rückwärtsfahrt geschlossene erste Kupplung zumindest teilweise geöffnet, wobei das Öffnen der ersten Kupplung durch das erste Regelventil gesteuert wird. Dabei befindet sich das erste Umschaltventil in seiner ersten Stellung B₁. An dem ersten Umschaltventil liegt dabei kein gemeinsames Steuersignal an, so dass sich das Schaltventil des Gruppenselektors in seiner ersten Stellung befindet, in der die zweite Gruppe von Aktuatoren mit der Regelungseinheit verbunden ist. Durch das Anlegen des weiteren Steuersignals wird das Schaltventil des Gruppenselektors in dessen zweite Stellung geschaltet, so dass nun die erste Gruppe von Aktuatoren mit der Regelungseinheit verbunden ist. Die Bereitstellung eines regelbaren Druckes übernimmt dabei das zweite Regelventil, wobei das zweite Umschaltventil sich in der zweiten Stellung befindet. Somit ist das zweite Regelventil für das Auslegen des Rückwärtsganges und für das Einlegen des ersten Vorwärtsganges zuständig. Durch eine Regelung des Druckes für die erste Kupplung in einer Synchronisierungsphase beim Einlegen des ersten Vorwärtsganges lässt sich die benötigte Schaltzeit bzw. die vom Fahrer des Kraftfahrzeugs wahrgenommene oder gefühlte Schaltzeit reduzieren, indem das für die Synchronisierung bereitstehende Moment im Teilgetriebe als Antriebsmoment genutzt wird. Darauf wird später näher eingegangen.

Anhand eines in den Figuren dargestellten Ausführungsbeispieles wird die Erfindung näher erläutert. Es zeigen:
- Figur 1: ein Ausführungsbeispiel der Erfindung in schematischer Darstellung;
- Figur 2: ein Blockschaltbild einer bevorzugten Umsetzung des Ausführungsbeispieles der Figur 1; und
- Figur 3: mehrere Drehmomentverläufe in einem Teilgetriebe beim Einlegen eines Ganges.

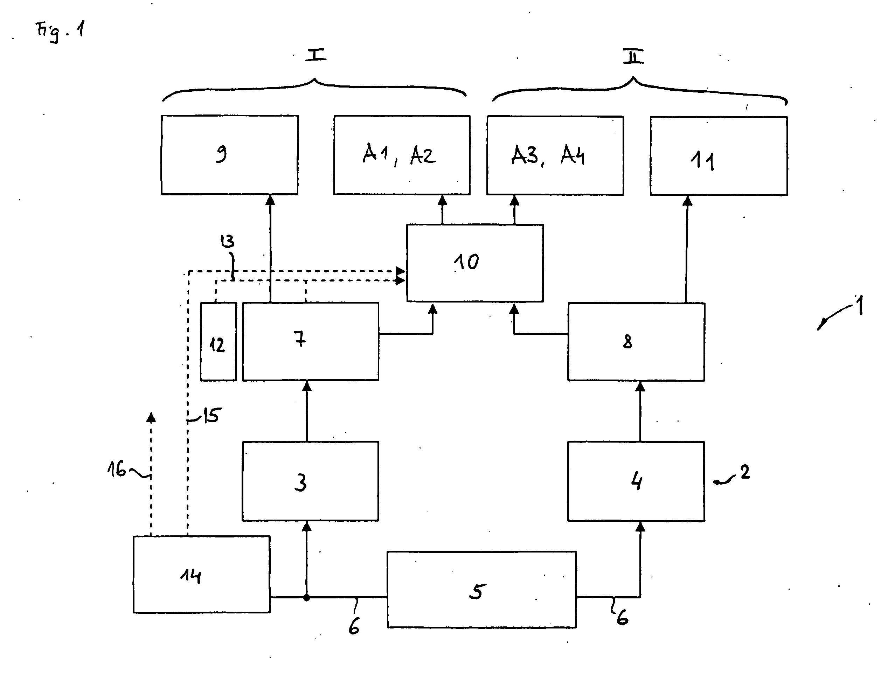

Figur 1 zeigt in schematischer Darstellung eine erfindungsgemäße hydraulische Steuerungsvorrichtung, die in ihrer Allgemeinheit mit 1 bezeichnet wird. Mit der Steuerungsvorrichtung 1 lässt sich ein hier nicht weiter dargestelltes Doppelkupplungsgetriebe beispielsweise in einem Kraftfahrzeug steuern. Die Steuerungsvorrichtung 1 umfasst eine Regelungseinheit 2 mit einem ersten Druckregelventil bzw. Druckregler 3 und einem zweiten Druckregler 4. Die Druckregler 3, 4 sind eingangsseitig mit einer Druckölversorgung 5 verbunden. Die Druckölversorgung 5 stellt einen Betriebsdruck 6 zur Verfügung.

Dem ersten Druckregler 3 ist ein erstes Umschaltventil 7 zugeordnet. Entsprechend ist dem zweiten Druckregler 4 ein zweites Umschaltventil 8 zugeordnet. Über das erste Umschaltventil lässt sich der erste Druckregler 3 entweder mit einer ersten Kupplung 9 oder mit Aktuatoren A1, A2, A3, A4 des Doppelkupplungsgetriebes verbinden. Die Verbindung zu den Aktuatoren A1, A2, A3, A4 erfolgt dabei über einen Gruppenselektor 10, durch den entweder eine erste Gruppe von Aktuatoren A1, A2 oder eine zweite Gruppe von Aktuatoren A3, A4 ausgewählt werden können. Sind beispielsweise die Aktuatoren A3, A4 ausgewählt, so lassen sich diese bei entsprechender Stellung des ersten Umschaltventils 7 mit dem ersten Druckregler 3 verbinden. Durch das zweite Umschaltventil 8 ist eine Verbindung des zweiten Druckreglers 4 mit den Aktuatoren A1, A2, A3, A4 oder mit einer zweiten Kupplung 11 des Doppelkupplungsgetriebes möglich.

Durch die Aktuatoren A1, A2, A3, A4 lassen sich einzelne Gänge des Getriebes einlegen oder auslegen. Das Doppelkupplungsgetriebe umfasst dabei ein erstes und ein zweites Teilgetriebe, wobei die erste Kupplung dem ersten Teilgetriebe und die zweite Kupplung dem zweiten Teilgetriebe zugeordnet ist. Durch das erste Teilgetriebe lässt sich dabei eine erste Gruppe von Gängen realisieren, die durch die erste Gruppe von Aktuatoren eingelegt bzw. ausgelegt werden können. Das Gleiche gilt sinngemäß auch für das zweite Teilgetriebe, durch das eine zweite Gruppe von Gängen darstellbar ist und die sich durch die zweite Gruppe von Aktuatoren einlegen bzw. auslegen lassen. In Figur 1 soll durch die geschweiften Klammern die Zuordnung der ersten Kupplung 9 und der Aktuatoren A1, A2 zu dem ersten, mit I bezeichneten Teilgetriebe verdeutlicht werden. Die zweite Kupplung 11 und die Aktuatoren A3, A4 sind anderen Teilgetriebe, dem zweiten Teilgetriebe II zugeordnet (siehe geschweifte Klammer).

Bei den Kupplungen 9, 11 soll es sich um Kupplungen handeln, die bei Druckbeaufschlagung geschlossen werden und dann ein Drehmoment übertragen ("normally open clutch").

Um das erste Umschaltventil 7 zu schalten, ist ein Signalelement 12 vorgesehen, das ein Steuersignal für das erste Umschaltventil 7 erzeugt. Das Steuersignal wird dabei von dem Signalelement 12 über eine Signalleitung 13 zum ersten Umschaltventil 7 geführt. Gleichzeitig verbindet die Signalleitung 13 das Signalelement 12 auch mit dem Gruppenselektor 10. Wird das erste Umschaltventil 7 mit dem Steuersignal des Steuerelementes 12 beaufschlagt, verbindet das Umschaltventil 7 den ersten Druckregler 3 mit dem Gruppenselektor 10, wobei die erste Kupplung 9 vom Druckregler 3 getrennt und drucklos gestellt wird. Bei Anliegen des Steuersignals an dem Gruppenselektor 10 stellt dieser eine Verbindung zu den Aktuatoren A1, A2 her und trennt die Aktuatoren von der Regelungseinheit 2.

Die Steuerungsvorrichtung 1 umfasst des weiteren ein zusätzliches Signalelement oder eine Ansteuerung 14, das bzw. die über eine Signalleitung 15 mit dem Gruppenselektor 10 verbunden ist. Das weitere Signalelement 14 erzeugt ein Steuersignal, durch das der Gruppenselektor 10 die Aktuatoren A1, A2 auswählt. Folglich können die Aktuatoren A1, A2 mit regelbarem Druck beaufschlagt werden, wenn entweder das Steuersignal des Signalelementes 12 oder das Steuersignal des weiteren Signalelementes 14 anliegt. Auch sind die Aktuatoren A1, A2 ausgewählt, wenn beide Steuersignale gleichzeitig anliegen.

Durch das zusätzliche Signalelement 14 wird die Möglichkeit geschaffen, dass die erste Kupplung 9 und die erste Gruppe von Aktuatoren A1, A2 gleichzeitig mit Druck beaufschlagt werden können. Dafür wird das Steuersignal des Signalelementes auf Null gesetzt, so dass das erste Umschaltventil 7 die erste Kupplung 9 mit dem ersten Druckregler 3 verbindet. Durch das anliegende Steuersignal des zusätzlichen Signalelementes 14 wählt der Gruppenselektor 10 die Aktuatoren A1, A2 aus. Den für die Betätigung der Aktuatoren A1, A2 notwendige Druck liefet der zweite Druckregler 4.

Eine mit 16 bezeichnete Signalleitung soll in Figur 1 andeuten, dass das zusätzliche Signalelement zur Ansteuerung einer weiteren Ventileinheit bzw. Baugruppe eingesetzt wird. Auch sei darauf hingewiesen, dass es sich bei Figur 1 nur um eine schematische Darstellung handelt, bei der weitere Elemente oder Bauteile der hydraulischen Steuerungsvorrichtung 1 der Übersicht halber nicht dargestellt sind.

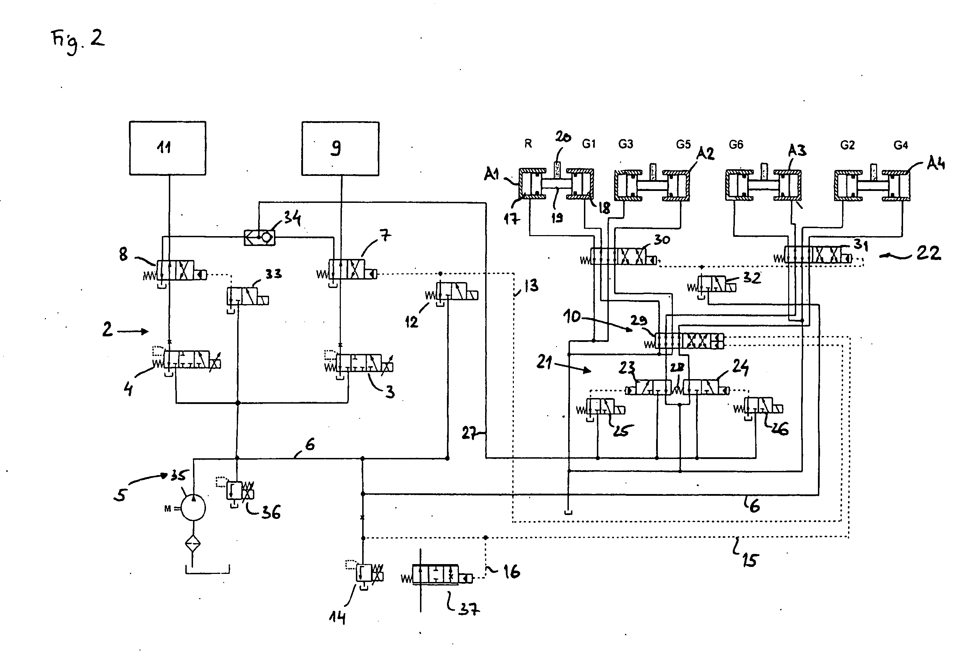

Figur 2 zeigt ein Blockschaltbild einer bevorzugten Umsetzung der Steuerungsvorrichtung 1. Bauteile, die zu den in Figur 1 dargestellten Bauteilen identisch oder ähnlich sind, werden mit entsprechend gleichen Bezugszeichen versehen.

Die Aktuatoren A1, A2, A3, A4 sind jeweils als doppelseitig ansteuerbare Schaltzylinder ausgebildet. Sie weisen jeweils eine erste Kammer 17 und eine zweite Kammer 18 auf (siehe Aktuator A1). Wird beispielsweise ein Doppelkolben 19 mit einer daran befestigten Schaltgabel 20 (nur ansatzweise dargestellt) in der Darstellung der Figur 2 nach rechts bewegt, indem die erste Kammer 17 mit Druck beaufschlagt wird und die zweite Kammer 18 drucklos gestellt wird, wird ein erster Rückwärtsgang G1 eingelegt. Mit dem Aktuator A1 lässt sich entsprechend in Gegenrichtung ein Rückwärtsgang R einlegen. Mit den anderen Aktuatoren A2, A3, A4 lassen sich in analoger Wiese weitere Vorwärtsgänge G2, G3, G4, G5, G6 einlegen.

Um eine einzelne Kammer 17, 18 eines Aktuators A1, A2, A3, A4 mit Druck zu beaufschlagen und gleichzeitig alle anderen Kammern drucklos zu stellen, sind mehrere in Reihe geschaltete Ventileinheiten vorgesehen, nämlich eine Aktuatorauswahl 21, der bereits oben erwähnte Gruppenselektor 10 und eine Kammerauswahl 22.

Die Aktuatorauswahl 21 umfasst zwei Schaltventile 23, 24, denen jeweils ein Signalelement 25, 26 zugeordnet ist. Figur 2 zeigt die Aktuatorauswahl 21 in einer Ruhestellung, in der die Kammern 17, 18 aller Aktuatoren A1, A2, A3, A4 drucklos gestellt sind. Die Signalelemente 25, 26 erzeugen ein Steuersignal in Form eines Steuerdruckes, durch den die Schaltventile 23, 24 in eine jeweils zweite Stellung gedrückt werden können. Durch die Aktuatorauswahl 21 lassen sich entweder die Aktuatoren A1, A3 oder die Aktuatoren A2, A4 über eine Leitung 27 mit der Regelungseinheit 2 verbinden.

Die Schaltventile 23, 24 der Aktuatorauswahl 21 sind über eine Feder 28 miteinander gekoppelt. Diese Koppelung verhindert, dass sich die beiden Schaltventile 23, 24 - beispielsweise bedingt durch eine Fehlansteuerung (beide Signalelemente 25, 26 erzeugen einen Steuerdruck) - jeweils in ihrer zweiten Stellung befinden und damit die Aktuatoren A1, A3 bzw. die Aktuatoren A2, A4 gleichzeitig über die Leitung 27 mit der Regelungseinheit 2 verbinden. Durch die Auslegung der wirksamen Flächen an Schaltventilen 23, 24, auf die die Steuerdrücke der Signalelemente 25, 26 wirken, ist zudem eine Priorisierung der Schaltventile 23, 24 festgelegt. Liegt jeweils an den Schaltventilen 23, 24 ein Steuerdruck an, so schiebt das Schaltventil 23 das Schaltventil 24 in dessen Ruhestellung und ermöglicht eine Verbindung zwischen der Regelungseinheit 2 und den Aktuatoren A1, A3 bei gleichzeitiger Drucklosstellung der Aktuatoren A2, A4.

Der Gruppenselektor 10 umfasst ein Schaltventil 29, das Figur 2 in einer federbelasteten Ruhestellung zeigt. Wird über eine der Signalleitungen 13, 15 ein Steuersignal in Form eines Steuerdruckes auf das Schaltventil 29 gelegt, schaltet das Schaltventil 29 in eine zweite Stellung. In dieser zweiten Stellung können die Gänge des ersten Teilgetriebes, die Gänge R, G1, G3, G5, geschaltet werden.

Die Kammerauswahl 22 umfasst zwei parallel angeordnete Schaltventile 30, 31, die über ein gemeinsames Signalelement 32 angesteuert werden. Ist beispielsweise durch die Aktuatorauswahl 21 und den Gruppenselektor 10 der Aktuator A1 ausgewählt, so lässt sich durch das Schaltventil 30 einstellen, ob die erste Kammer 17 oder die zweite Kammer 18 mit Druck beaufschlagt werden soll.

Wie dem ersten Umschaltventil 7 ist dem zweiten Umschaltventil 8 ein Signalelement 33 zugeordnet, durch das das Umschaltventil 8 mit einem Steuerdruck beaufschlagbar ist. Figur 2 zeigt das zweite Umschaltventil 8 in einer ersten Stellung B₂, in der die zweite Kupplung 11 mit dem zweiten Druckregler 4 verbunden ist. Die Stellung B₂ stellt eine federbelastete Ruhestellung des zweiten Umschaltventils 8 dar. In einer Stellung C₂ ist eine Verbindung zwischen dem zweiten Druckregler 4 und einem Umschalter 34 hergestellt, an dem sich die Leitung 27 zu den Aktuatoren anschließt.

Das erste Umschaltventil 7 befindet sich ebenfalls in einer ersten Stellung B₁. In der Stellung B₁ ist der Druckregler 3 mit der ersten Kupplung 9 verbunden. In einer zweiten Stellung C₁ des ersten Umschaltventils wird der erste Druckregler 3 über den Umschalter 34 und über die Leitung 27 mit den Aktuatoren A1, A2, A3, A4 verbunden. Dies bedeutet, dass in der Stellung C₁ ein Druck auf eine der Kammern der Aktuatoren gegeben werden kann, um so einen Gang auszulegen bzw. einzulegen.

Die Druckölversorgung 5 umfasst eine Pumpe 35 und einen Hauptregler 36. Durch diesen Hauptregler 36 lässt sich ein gewünschter Wert für den Betriebsdruck 6 einstellen.

Das zusätzliche Signalelement 14 ist als Zweibereichsregler ausgebildet. In einem ersten Druckbereich des Zweibereichsreglers wird ein Kühlregulator 37 gesteuert, der eine geregelte Kühlölmenge bereitstellt. In einem zweiten Druckbereich des Zweibereichsreglers 14 schaltet der Kühlölregulator 37 in eine Notstellung, in der über eine Blende für eine begrenzte, aber ausreichend große Kühlölmenge gesorgt ist. In dem zweiten Druckbereich ist der Steuerdruck des Signalelementes 14 so groß, dass das Schaltventil 29 des Gruppenselektors 10 von der federbelasteten Ruhestellung in die zweite Stellung schaltet bzw. die zweite Stellung aufrecht hält.

Anhand eines Wechsels vom Rückwärtsgang R in den ersten Vorwärtsgang G1 soll ein Verfahren beschrieben werden, das durch die Steuerungsvorrichtung 1 umgesetzt werden kann. Bei diesem Gangwechsel handelt es sich um einen Gangwechsel innerhalb eines Teilgetriebes. Bezüglich eines Gangwechsels von einem Gang eines Teilgetriebes zu einem Gang des anderen Teilgetriebes sei auf die Ausführungen der EP 1 635 091 A1 verwiesen.

Ausgangspunkt soll der eingelegte Rückwärtsgang R sein. Der Rückwärtsgang R ist dabei dem ersten Teilgetriebe I zugeordnet, so dass bei einer Drehmomentübertragung über das erste Teilgetriebe I die erste Kupplung 9 geschlossen ist. Um nun aus dem Rückwärtsgang R den ersten Gang G1 einzulegen, wird die erste Kupplung 9 durch den ersten Druckregler 3 geöffnet. Das erste Umschaltventil 7 befindet sich dabei in der Stellung B₁, so wie sie in Figur 2 dargestellt ist. Das Signalelement 12 erzeugt dabei keinen Steuerdruck. Um nun den ersten Vorwärtsgang G1 einlegen zu können, wird das Schaltventil 29 des Gruppenselektors 10 in die zweite Stellung geschaltet. Dies geschieht durch das Signalelement 14, indem der Steuerdruck erhöht und der zweite Druckbereich erreicht wird. Dabei schaltet der Kühlölregulator 37 in die Notstellung, in der er über eine Blende eine begrenzte Kühlölmenge bereitstellt.

Über das Signalelement 25 ist das Schaltventil 23 der Aktuatorauswahl 21 mit einem Steuerdruck beaufschlagt, so dass eine Verbindung von dem Umschalter 34 über die Leitung 27 zu dem Aktuator A1 hergestellt ist. Um nun die Schaltgabel 20 in der Darstellung der Figur 2 nach rechts zu bewegen, um den ersten Vorwärtsgang G1 einzulegen, muss das Schaltventil 30 der Kammerauswahl 22 durch das Signalelement 32 in eine zweite Stellung (abweichend von der Stellung, die in der Figur 2 dargestellt ist) geschaltet werden, so dass die erste Kammer 17 des Aktuators A1 mit Druck beaufschlagt wird.

Den zum Gangeinlegen notwendigen Druck liefert der zweite Druckregler 4. Dabei befindet sich das zweite Umschaltventil 8 in seiner Stellung C₂, in der es eine Verbindung zu dem Umschalter 34 herstellt. Somit ist eine Verbindung geschaffen zwischen dem zweiten Druckregler 4 und der ersten Kammer 17 des Aktuators A1. Ist der erste Vorwärtsgang G1 eingelegt, so kann die erste Kupplung 9, die während des Gangeinlegens über den ersten Druckregler 3 geregelt wurde, geschlossen werden. Aufgrund der Regelung durch den ersten Druckregler 3 kann die erste Kupplung 9 beim Gangeinlegen im Greifpunkt oder in der Nähe des Greifpunktes gehalten werden und muss nicht vollständig entlüftet werden.

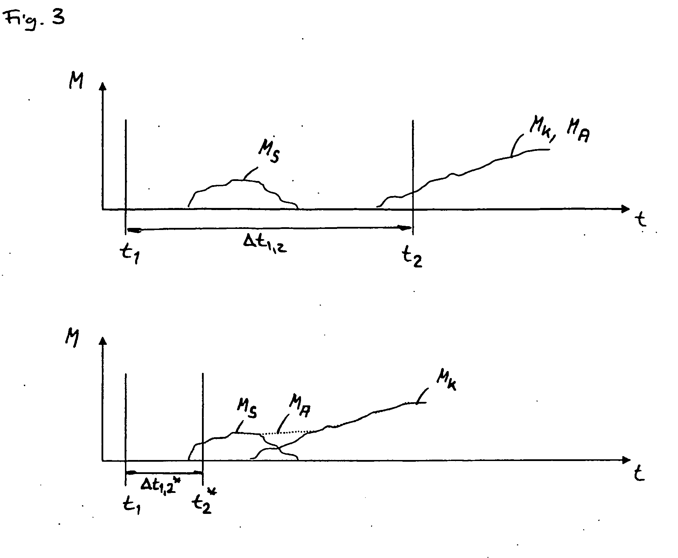

Figur 3 zeigt den zeitlichen Verlauf von Drehmomenten, wie sie beim Schalten in einem Teilgetriebe auftreten können. Das obere Diagramm zeigt die Verhältnisse bei einem Gangwechsel, bei dem nicht auf die erfindungsgemäße Steuerungsvorrichtung zurückgegriffen werden kann. Im Zeitpunkt t₁ wird der Fahrerwunsch erkannt, dass vom Rückwärtsgang R in den ersten Vorwärtsgang G1 geschaltet werden soll. Beim Einlegen in den ersten Vorwärtsgang G1 liegt an einer Ausgangsseite des ersten Teilgetriebes ein Synchronisiermoment M_{S} an. Dieses Synchronisiermoment M_{S} ist notwendig, um den ersten Vorwärtsgang G1 einlegen zu können, und wird gespeist von einem Massenträgheitsmoment einer Eingangsseite des Teilgetriebes (im wesentlichen Massenträgheitsmoment der ersten Kupplung 9) und von einem etwaigen Restschleppmomentes der ersten Kupplung 9. Nach erfolgtem Gangeinlegen (das heißt nach abgeschlossener Synchronisierung) wird die erste Kupplung 9 geschlossen, so dass nun das erste Teilgetriebe Drehmoment überträgt. Im Zeitpunkt t₂ liegt in gewisser Höhe ein Antriebsmoment M_{A} an der Ausgangsseite des Teilgetriebes an, so dass für den Fahrer ab diesem Zeitpunkt der Schaltvorgang als beendet gilt. Die wahrgenommene oder gefühlte Schaltzeit beträgt t_{1,2}.

Mit der erfindungsgemäßen Steuerungsvorrichtung ist es möglich, noch während der Synchronisierung ein Kupplungsmoment M_{K} leicht ansteigen zu lassen (unteres Diagramm). Somit kann das Synchronisiermoment M_{S} zum Anfahren in dem ersten Vorwärtsgang G1 genutzt werden. Daraus resultiert ein deutlich kürzerer Abstand t_{1,2*} zwischen dem Zeitpunkt t₁, in dem der Fahrerwunsch erkannt worden ist, und dem Zeitpunkt t_{2*}, indem auf der Ausgangs- oder Abtriebsseite des Teilgetriebes I ein Moment zum Anfahren in dem ersten Gang vorliegt. Man erkennt, dass im Vergleich zum herkömmlichen Gangwechsel die Schaltzeit deutlich reduziert werden kann. Zudem wird das auftretende Synchronisiermoment M_{S} im Gegensatz zu dem herkömmlichen Verfahren nicht als einzelner Stoß empfunden, so dass das Synchronmoment deutlich erhöht und damit die Synchronzeit deutlich verringert werden kann.

Einen weiteren Vorteil bietet die erfindungsgemäße Steuerungsvorrichtung beim Start des Doppelkupplungsgetriebes. Ist weder eine der Kupplungen befüllt noch ein Gang eingelegt, kann durch das oben beschriebene Verfahren gleichzeitig ein Gang eingelegt und die Kupplung schnell befüllt werden. Um den maximalen Ölbedarf zu reduzieren, kann dabei die Kupplungsschellbefüllung in die Synchronisationsphase des Gangeinlegens gelegt werden, da hierbei zwar Druck aufgebaut sein muss, der betreffende Aktuator sich jedoch nicht bewegt und somit keinen Ölvolumenbedarf hat. Auf diese Weise kann nach Systemstart schnellstmöglich ein Anfahrgang zur Verfügung gestellt werden.

Ein weiterer Vorteil ist bereits oben beschrieben worden. Beim Umschalten in einem Teilgetriebe kann die dem Teilgetriebe zugeordnete Kupplung nahe dem Greifpunkt gehalten werden, um dann nach erfolgtem Gangeinlegen direkt das Drehmoment vom Motor übertragen zu können. Ein vollständiges Befüllen der Kupplung aus einem entlüfteten Zustand ist nicht notwendig, was die Schaltzeiten reduziert. Auch müssen Hydraulikventile nicht umgeschaltet werden, was die Schaltzeiten ebenfalls verkürzt.

### Bezugszeichenliste

- 1: Steuerungsvorrichtung
- 2: Regelungseinheit
- 3: Druckregler
- 4: Druckregler
- 5: Druckölversorgung
- 6: Betriebsdruck
- 7: Umschaltventil
- 8: Umschaltventil
- 9: erste Kupplung
- 10: Gruppenselektor
- 11: zweite Kupplung
- 12: Signalelement
- 13: Signalelement
- 14: zusätzliches Signalelement
- 15: Signalleitung
- 16: Signalleitung
- 17: erste Kammer
- 18: zweite Kammer
- 19: Doppelkolben
- 20: Schaltgabel
- 21: Aktuatorauswahl
- 22: Kammerauswahl
- 23: Schaltventil
- 24: Schaltventil
- 25: Signalelement
- 26: Signalelement
- 27: Leitung
- 28: Feder
- 29: Schaltventil
- 30: Schaltventil
- 31: Schaltventil
- 32: Signalelement
- 33: Signalelement
- 34: Umschalter
- 35: Pumpe
- 36: Hauptregler
- 37: Kühlölregulator
- R: Rückwärtsgang
- G1: erster Vorwärtsgang (G2 bis G6 weitere Vorwärtsgänge)
- A1: Aktuator (A2 bis A4 weitere Aktuatoren)
- M_{A}: Antriebsmoment
- M_{K}: Kupplungsmoment
- M_{S}: Synchronisiermoment
- t: Zeitpunkt
- t: Zeitdifferenz

## Patentansprüche

1. Hydraulische Steuerungsvorrichtung (1) für ein automatisiertes Doppelkupplungsgetriebe, das ein erstes Teilgetriebe (I) mit einer ersten Kupplung (9) und ein zweites Teilgetriebe (II) mit einer zweiten Kupplung (11) sowie mehrere Aktuatoren (A1, A2, A3, A4) zum Ein-/Auslegen von Gängen (R, G1 bis G6) der zwei Teilgetriebe (I, II) aufweist, mit einer Regelungseinheit (2), die wenigstens einen regelbaren Druck und/oder einen regelbaren Volumenstrom für die Betätigung der ersten und zweiten Kupplung (9, 11) und für die Betätigung der Aktuatoren (A1, A2, A3, A4) vorgibt, und mit einer Umschaltvorrichtung (7,8), die zwischen der Regelungseinheit (2) und den Kupplungen (9, 11) bzw. den Aktuatoren (A1, A2, A3, A4) angeordnet ist und durch die der regelbare Druck bzw. der regelbare Volumenstrom auf die Kupplungen (9, 11) und/oder die Aktuatoren (A1, A2, A3, A4) schaltbar ist, wobei die Umschalteinrichtung wenigstens ein erstes Umschaltventil (7) umfasst, ein Gruppenselektor (10) vorgesehen ist, durch den die Regelungseinheit (2) mit einer ersten, dem ersten Teilgetriebe (I) zugeordneten Gruppe von Aktuatoren (A1, A2) oder mit einer zweiten, dem zweiten Teilgetriebe (II) zugeordneten Gruppe von Aktuatoren (A3, A4) verbindbar ist, und wobei das erste Umschaltventil (7) und der Gruppenselektor (10) durch ein gemeinsames Steuersignal (13) ansteuerbar sind, **dadurch gekennzeichnet, dass** der Gruppenselektor (10) durch ein weiteres Steuersignal (15) ansteuerbar ist, wodurch der wenigstens eine regelbare Druck und/oder regelbare Volumenstrom gleichzeitig auf die erste Kupplung (9) und die erste, dem ersten Teilgetriebe (I) zugeordnete Gruppe von Aktuatoren (A1, A2) schaltbar ist.

2. Steuerungsvorrichtung (1) nach Anspruch 1, **dadurch gekennzeichnet, dass** durch die erste Gruppe von Aktuatoren (A1, A2) ein Rückwärtsgang (R) und ein erster Vorwärtsgang (G1) des Doppelkupplungsgetriebes ein-/auslegbar sind.

3. Steuerungsvorrichtung (1) nach Anspruch 1 oder 2, **dadurch gekennzeichnet, dass** die Umschaltvorrichtung (7,8) ein zweites Umschaltventil (8) und die Regelungseinheit ein erstes Regelventil (3) und ein zweites Regelventil (4) umfassen, wobei das erste Umschaltventil (7) in einer Stellung (B₁) das erste Regelventil (3) mit der ersten Kupplung (9) verbindet und von den Aktuatoren (A1, A2, A3, A4) trennt und in einer Stellung (C₁) das erste Regelventil (3) mit den Aktuatoren (A1, A2, A3, A4) verbindet und von der ersten Kupplung (9) trennt; und das zweite Schaltventil (8) in einer Stellung (B₂) das zweite Regelventil (4) mit der zweiten Kupplung (11) verbindet und von den Aktuatoren (A1, A2, A3, A4) trennt und in eine Stellung (C₂) das zweite Regelventil (4) mit den Aktuatoren (A1, A2, A3, A4) verbindet und von der zweiten Kupplung (11) trennt.

4. Steuerungsvorrichtung (1) nach Anspruch 3, **dadurch gekennzeichnet, dass** die Stellung (B₁) des ersten Umschaltventils (7) eine federbelastete Ruhestellung darstellt und dass Stellung (C₁) sich durch Anliegen des gemeinsamen Steuersignals ergibt.

5. Steuerungsvorrichtung (1) nach einem der Ansprüche 1 bis 4, **dadurch gekennzeichnet, dass** der Gruppenselektor (10) ein Umschaltventil (29) umfasst, das in einer ersten Stellung die erste Gruppe von Aktuatoren (A1, A2) von der Regelungseinheit trennt und in einer zweiten Stellung eine Verbindung zwischen der ersten Gruppe von Aktuatoren (A1, A2) und der Regelungseinheit (2) ermöglicht, wobei das Schaltventil (29) sich in der zweiten Stellung befindet oder in die zweite Stellung schaltet, wenn das gemeinsame Steuersignal (13) und/oder das weitere Steuersignal (15) an dem Schaltventil (29) anliegen.

6. Steuerungsvorrichtung (1) nach Anspruch 5, **dadurch gekennzeichnet, dass** die erste Stellung des Schaltventils (29) des Gruppenselektors (10) eine federbelastete Ruhestellung ist.

7. Steuerungsvorrichtung (1) nach einem der Ansprüche 1 bis 6, **dadurch gekennzeichnet, dass** das weitere Steuersignal (15) für den Gruppenselektor (10) von einem Signalelement (14) erzeugt wird, durch das eine weitere Ventileinheit (37) angesteuert wird.

8. Steuerungsvorrichtung (1) nach Anspruch 7, **dadurch gekennzeichnet, dass** das Signalelement (14) als Zweibereichsregler ausgelegt ist, wobei in einem ersten Bereich die weitere Ventileinheit (37) angesteuert wird und in einem zweiten Bereich der Gruppenselektor (10) betätigbar ist.

9. Steuerungsvorrichtung (1) nach Anspruch 7 oder 8, **dadurch gekennzeichnet, dass** im zweiten Bereich die weitere Ventileinheit (37) eine Notstellung einnimmt.

10. Steuerungsvorrichtung (1) nach einem der Ansprüche 7 bis 9, **dadurch gekennzeichnet, dass** die weitere Ventileinheit (37) zur Regulierung von Kühlöl dient.

## Claims

1. Hydraulic control device (1) for an automatic dual-clutch transmission which has a first partial transmission (I) with a first clutch (9) and a second partial transmission (II) with a second clutch (11) and also a plurality of actuators (A1, A2, A3, A4) for engaging/disengaging gears (R, G1 to G6) of the two partial transmissions (I, II), having a regulating unit (2) which specifies at least one regulable pressure and/or a regulable volume flow for the actuation of the first and second clutches (9, 11) and for the actuation of the actuators (A1, A2, A3, A4), and having a switching device (7, 8) which is arranged between the regulating unit (2) and the clutches (9, 11) and actuators (A1, A2, A3, A4) respectively and by means of which the regulable pressure or regulable volume flow can be switched to the clutches (9, 11) and/or to the actuators (A1, A2, A3, A4), with the switching device comprising at least one first switching valve (7), with a group selector (10) being provided, by means of which the regulating unit (2) can be connected to a first group of actuators (A1, A2) assigned to the first partial transmission (I) or can be connected to a second group of actuators (A3, A4) assigned to the second partial transmission (II), and with it being possible for the first switching valve (7) and the group selector (10) to be activated by a common control signal (13), **characterized in that** the group selector (10) can be activated by a further control signal (15), as a result of which the at least one regulable pressure and/or regulable volume flow can be switched simultaneously to the first clutch (9) and to the first group of actuators (A1, A2) assigned to the first partial transmission (I).

2. Control device (1) according to Claim 1, **characterized in that** a reverse gear (R) and a first forward gear (G1) of the dual-clutch transmission can be engaged/disengaged by means of the first group of actuators (A1, A2).

3. Control device (1) according to Claim 1 or 2, **characterized in that** the switching device (7, 8) comprises a second switching valve (8) and the regulating unit comprises a first regulating valve (3) and a second regulating valve (4), wherein the first switching valve (7), in a position (B₁), connects the first regulating valve (3) to the first clutch (9) and separates said first regulating valve (3) from the actuators (A1, A2, A3, A4), and in a position (C₁), connects the first regulating valve (3) to the actuators (A1, A2, A3, A4) and separates said first regulating valve (3) from the first clutch (9); and the second switching valve (8), in a position (B₂), connects the second regulating valve (4) to the second clutch (11) and separates said second regulating valve (4) from the actuators (A1, A2, A3, A4), and in a position (C₂), connects the second regulating valve (4) to the actuators (A1, A2, A3, A4) and separates said second regulating valve (4) from the second clutch (11).

4. Control device (1) according to Claim 3, **characterized in that** the position (B₁) of the first switching valve (7) constitutes a spring-loaded rest position and **in that** position (C₁) is assumed when the common control signal is applied.

5. Control device (1) according to one of Claims 1 to 4**, characterized in that** the group selector (10) comprises a switching valve (29) which, in a first position, separates the first group of actuators (A1, A2) from the regulating unit and, in a second position, enables a connection between the first group of actuators (A1, A2) and the regulating unit (2), with the switching valve (29) being situated in the second position or switching into the second position if the common control signal (13) and/or the further control signal (15) are/is applied to the switching valve (29).

6. Control device (1) according to Claim 5, **characterized in that** the first position of the switching valve (29) of the group selector (10) is a spring-loaded rest position.

7. Control device (1) according to one of Claims 1 to 6, **characterized in that** the further control signal (15) for the group selector (10) is generated by a signal element (14) which serves to actuate a further valve unit (37).

8. Control device (1) according to Claim 7, **characterized in that** the signal element (14) is designed as a dual-region regulator, with the further valve unit (37) being activated in a first region and with it being possible for the group selector (10) to be actuated in a second region.

9. Control device (1) according to Claim 7 or 8, **characterized in that,** in the second region, the further valve unit (37) assumes an emergency position.

10. Control device (1) according to one of Claims 7 to 9, **characterized in that** the further valve unit (37) serves for the regulation of cooling oil.

## Revendications

1. Dispositif de commande hydraulique (1) pour une transmission automatisée à double embrayage, qui présente une première transmission partielle (I) avec un premier embrayage (9) et une deuxième transmission partielle (II) avec un deuxième embrayage (11) ainsi que plusieurs actionneurs (A1, A2, A3, A4) pour l'enclenchement/le désenclenchement de rapports (R, G1 à G6) des deux transmissions partielles (I, II), avec une unité de régulation (2) qui prédéfinit au moins une pression réglable et/ou un débit volumique réglable pour l'actionnement du premier et du deuxième embrayage (9, 11) et pour l'actionnement des actionneurs (A1, A2, A3, A4), et avec un dispositif d'inversion (7, 8) qui est disposé entre l'unité de régulation (2) et les embrayages (9, 11) ou les actionneurs (A1, A2, A3, A4) et par le biais duquel la pression réglable ou le débit volumique réglable peut être commuté aux embrayages (9, 11) et/ou aux actionneurs (A1, A2, A3, A4), le dispositif d'inversion comprenant au moins une première soupape d'inversion (7), un sélecteur de groupe (10) étant prévu, lequel permet de relier l'unité de régulation (2) à un premier groupe d'actionneurs (A1, A2) associé à la première transmission partielle (I) ou à un deuxième groupe d'actionneurs (A3, A4) associé à la deuxième transmission partielle (II), la première soupape d'inversion (7) et le sélecteur de groupe (10) pouvant être commandés par un signal de commande commun (13), **caractérisé en ce que** le sélecteur de groupe (10) peut être commandé par un autre signal de commande (15), de sorte que l'au moins une pression réglable et/ou débit volumique réglable puissent être commutés simultanément au premier embrayage (9) et au premier groupe d'actionneurs (A1, A2) associé à la première transmission partielle (I).

2. Dispositif de commande (1) selon la revendication 1, **caractérisé en ce qu'**un rapport de marche arrière (R) et un premier rapport de marche avant (G1) de la transmission à double embrayage peuvent être enclenchés/désenclenchés par le premier groupe d'actionneurs (A1, A2).

3. Dispositif de commande (1) selon la revendication 1 ou 2, **caractérisé en ce que** le dispositif d'inversion (7, 8) comprend une deuxième soupape d'inversion (8) et l'unité de régulation comprend une première soupape de régulation (3) et une deuxième soupape de régulation (4), la première soupape d'inversion (7), dans une position (B₁) reliant la première soupape de régulation (3) au premier embrayage (9) et la séparant des actionneurs (A1, A2, A3, A4) et dans une position (C₁), reliant la première soupape de régulation (3) aux actionneurs (A1, A2, A3, A4) et la séparant du premier embrayage (9) ; et la deuxième soupape d'inversion (8), dans une position (B₂), reliant la deuxième soupape de régulation (4) au deuxième embrayage (11) et la séparant des actionneurs (A1, A2, A3, A4) et dans une position (C₂) reliant la deuxième soupape de régulation (4) aux actionneurs (A1, A2, A3, A4) et la séparant du deuxième embrayage (11).

4. Dispositif de commande (1) selon la revendication 3, **caractérisé en ce que** la position (B₁) de la première soupape d'inversion (7) constitue une position de repos sollicitée par ressort et **en ce que** la position (C₁) s'obtient par application du signal de commande commun.

5. Dispositif de commande (1) selon l'une quelconque des revendications 1 à 4, **caractérisé en ce que** le sélecteur de groupe (10) comprend une soupape d'inversion (29) qui, dans une première position, sépare le premier groupe d'actionneurs (A1, A2) de l'unité de régulation, et dans une deuxième position, permet une connexion entre le premier groupe d'actionneurs (A1, A2) et l'unité de régulation (2), la soupape d'inversion (29) se trouvant dans la deuxième position ou passant dans la deuxième position lorsque le signal de commande commun (13) et/ou l'autre signal de commande (15) sont appliqués à la soupape d'inversion (29).

6. Dispositif de commande (1) selon la revendication 5, **caractérisé en ce que** la première position de la soupape d'inversion (29) du sélecteur de groupe (10) est une position de repos sollicitée par ressort.

7. Dispositif de commande (1) selon l'une quelconque des revendications 1 à 6, **caractérisé en ce que** l'autre signal de commande (15) pour le sélecteur de groupe (10) est produit par un élément de signal (14) qui permet de commander une autre unité de soupape (37).

8. Dispositif de commande (1) selon la revendication 7**, caractérisé en ce que** l'élément de signal (14) est conçu sous forme de régulateur à deux zones, dans lequel, dans une première zone, l'autre unité de soupape (37) est commandée, et dans une deuxième zone, le sélecteur de groupe (10) peut être actionné.

9. Dispositif de commande (1) selon la revendication 7 ou 8, **caractérisé en ce que** dans la deuxième région, l'autre unité de soupape (37) adopte une position de secours.

10. Dispositif de commande (1) selon l'une quelconque des revendications 7 à 9, **caractérisé en ce que** l'autre unité de soupape (37) sert à la régulation de l'huile de refroidissement.
